# EUROPÄISCHE PATENTSCHRIFT

(11) **EP 2 749 341 B1**
(45) Veröffentlichungstag und Bekanntmachung des Hinweises auf die Patenterteilung: **10.04.2019**
(21) Anmeldenummer: 13198885.9
(22) Anmeldetag: 20.12.2013
(51) Int. Cl.: B01D 47/06, B03C 3/017, B03C 3/16, F23J 15/02, F23J 15/06, C21C 5/40

(54) **VORRICHTUNG UND VERFAHREN ZUM REINIGEN VON RAUCHGAS EINER METALLURGISCHEN ANLAGE**
DEVICE AND METHOD FOR PURIFICATION OF FLUE GAS OF A METALLURGICAL PLANT
DISPOSITIF ET PROCÉDÉ DE NETTOYAGE DE GAZ DE FUMÉE D'UNE INSTALLATION MÉTALLURGIQUE

(30) Priorität: 28.12.2012 DE 102012224521
(43) Veröffentlichungstag der Anmeldung: 02.07.2014
(73) Patentinhaber: SMS group GmbH, 40237 Düsseldorf (DE)
(72) Erfinder: Wübbels, Thilo, 40764 Langenfeld (DE); Meyn, Matthias, 41468 Neuss (DE)
(74) Vertreter: Klüppel, Walter

(56) Entgegenhaltungen:
- DE-A1- 1 501 384
- FR-A- 1 292 327
- JP-A- S56 121 613
- US-A- 3 029 578
- US-A- 3 852 409
- US-A- 4 272 499
- US-A- 4 957 512

## Beschreibung

Die Erfindung betrifft ein Verfahren zum Reinigen von Rauchgas einer metallurgischen Anlage nach dem Oberbegriff von Anspruch 1.

In einer metallurgischen Anlage, zum Beispiel ein Konverter oder ein Elektroofen, kommt es üblicherweise zur Bildung von Rauchgas. Zur Vermeidung einer Umweltverschmutzung muss das Rauchgas vor einer Abgabe an die Umgebung hinreichend entstaubt werden. Die Reinigung von Rauchgas kann mittels der bekannten Nasswäscher-Technologie erfolgen.

Ein sogenannter BAUMCO-Wäscher, der z.B. in DE 1 176 090 gezeigt ist, stellt einen Nasswäscher dar, dessen Verwendung seit geraumer Zeit bei Sauerstoff-Blaskonvertern bekannt ist. Der BAUMCO-Wäscher hat den Nachteil eines hohen Druckverlustes und einer daraus resultierenden notwendigen hohen Gebläseleistung, was zu einem hohen Energieverbrauch führt. Zusätzlich sind die mit einem BAUMCO-Wäscher erzielbaren Reingasstaubgehalte begrenzt, z. B. auf Werte von 30-50 mg/Nm³ (Milligramm pro Normkubikmeter).

Aus WO 2010/046071 A1 ist eine Technologie zur Reinigung von Rauchgas einer metallurgischen Anlage bekannt, wobei hierzu herkömmlich bekannte Anlagenkomponenten in Form eines Gaswäschers und eines nachfolgenden Nasselektrofilters verwendet werden. Der Gaswäscher und der Nasselektrofilter sind als separate Anlagenkomponenten vorgesehen, die miteinander verbunden sind. Ein Nachteil der Anlagentechnik gemäß WO 2010/046071 A1 besteht darin, dass sie große Abmessungen bzw. Baumaße beansprucht.

Aus US 4 272 499 A sind eine Reinigungsvorrichtung und ein entsprechendes Verfahren zum Reinigen von Rauchgas bekannt, wobei eine Vorreinigungsstufe in Form eines Zerstäubers, und eine Hauptreinigungsstufe in Form eines Zyklon, d.h. eines Fliehkraft-Wasserabscheiders vorgesehen sind. Innerhalb des Fliehkraft-Wasserabscheiders werden Wasser- bzw. Flüssigkeitstropfen radial nach aussen beschleunigt und an einer Wandung des Zyklon niedergeschlagen.

Aus US 3 029 578 A und DE 15 01 384 A1 ist es jeweils bekannt, stromaufwärts eines Elektrofilters einen Venturiwäscher anzuordnen. In US 3 029 578 A ist offenbart, dass in den Venturiwäscher Wasser unter Druck eingedüst wird, um am Auslass des Elektrofilters einen erhöhten Gasdruck zu erzielen, zwecks einer Reinigung der Niederschlagselektroden des Elektrofilters.

US 4 957 512 A zeigt ein gattungsgemäßes Verfahren nach dem Oberbegriff von Anspruch 1.

Der Erfindung liegt die Aufgabe zugrunde, die Reinigung von Rauchgas einer metallurgischen Anlage mit preiswerten Mitteln zu optimieren, die zudem robuster sind und geringere Abmessungen aufweisen.

Diese Aufgabe wird durch ein Verfahren mit den Merkmalen von Anspruch 1 gelöst. Vorteilhafte Weiterbildungen der Erfindung sind in den abhängigen Ansprüchen definiert.

Eine Reinigungsvorrichtung, mit der ein Verfahren nach der vorliegenden Erfindung durchgeführt werden kann, dient zum Reinigen von Rauchgas einer metallurgischen Anlage, und umfasst eine Vorreinigungsstufe, die mit einer ersten Verbindungsleitung mit der metallurgischen Anlage verbunden werden kann. In dieser Vorreinigungsstufe wird das Rauchgas unter Verwendung von Wasser vorgereinigt und gekühlt. Der Vorreinigungsstufe nachgeordnet ist eine Hauptreinigungsstufe, die mit einer zweiten Verbindungsleitung mit der Vorreinigungsstufe verbunden ist. In der Hauptreinigungsstufe erfolgt eine Feinreinigung des Rauchgases. In der zweiten Verbindungsleitung sind Mittel vorgesehen, durch die das Rauchgas beschleunigt und dadurch in Richtung der Hauptreinigungsstufe gefördert werden kann. Innerhalb des Nasselektrofilters ist zumindest eine Nebeldüse angeordnet, durch die im Filterbetrieb des Nasselektrofilters feine Wassertropfen in den Nasselektrofilter eingedüst werden können, so dass alle Komponenten des Nasselektrofilters ständig mit dem eingedüsten Wasser benetzt sind.

Ein Vorteil der vorstehend genannten Reinigungsvorrichtung besteht darin, dass unter Berücksichtigung der für die zweite Verbindungsleitung vorgesehenen Mittel zur Beschleunigung des Rauchgases die Vorreinigungsstufe einfach und robust ausgestaltet sein kann. Eine vollständige Verdampfung von Wasser innerhalb der Vorreinigungsstufe ist nicht erforderlich, weil die Mittel zur Beschleunigung des Rauchgases stromaufwärts der Hauptreinigungsstufe eine Erhöhung der Strömungsgeschwindigkeit des Rauchgases bewirken und dadurch die in dem Rauchgas enthaltenen Wasserpartikel feiner dispergiert werden. Somit wird eine für die Hauptreinigungsstufe notwendige feine bzw. hohe Dispersion von Wassertropfen innerhalb des Rauchgases von der Vorreinigungsstufe hinein in die zweite Verbindungsleitung verlagert, verbunden mit dem Vorteil, dass somit die Vorreinigungsstufe anlagentechnisch einfacher und robuster ausgebildet sein kann. Hinzu kommt, dass einzelne Anlagenkomponenten, nämlich Vorreinigungsstufe, Hauptreinigungsstufe und die für die zweite Verbindungsleitung vorgesehenen Mittel zur Beschleunigung des Rauchgases in Richtung der Hauptreinigungsstufe, für sich genommen jeweils bekannt sind, was lediglich geringe Investitionen erforderlich macht.

In vorteilhafter Weiterbildung der vorstehend genannten Reinigungsvorrichtung kann die Hauptreinigungsstufe in Form eines Nasselektrofilters ausgebildet sein, in dem eine Hauptreinigung des Rauchgases durch elektrostatische Abscheidung an zumindest einer Niederschlagselektrode erfolgt. Die für den Nasselektrofilter notwendige Vorreinigung und Kühlung des Rauchgases wird dabei durch die Vorreinigungsstufe unter Verwendung von Wasser gewährleistet. Bei der Vorreinigung des Rauchgases durch die Vorreinigungsstufe kann ein Reingasstaubgehalt von etwa 1 g/Nm³ (Gramm pro Normkubikmeter) erzielt werden. Der Nasselektrofilter dient ebenso als effizienter Tropfenabscheider.

Eine besonders robuste Ausgestaltung der genannten Mittel zur Beschleunigung des Rauchgases innerhalb der zweiten Verbindungsleitung ist in Form einer Wasserstrahlpumpe möglich. Hiermit kann die abgesaugte Menge an Rauchgas bzw. der Druck am metallurgischen Gefäß schnell und mit großer Genauigkeit gesteuert werden. Eine Wasserstrahlpumpe ist deshalb robust und für einen rauen Praxiseinsatz geeignet, weil sie keine bewegten Teile aufweist. Die für eine Wasserstrahlpumpe erforderliche Pumpenleistung zur Umwälzung einer Wassermenge ist geringer ist als die benötigte Ventilatorleistung bei einem herkömmlichen Nasswäscher, und führt somit zu einer Energieeinsparung.

Die Erfindung sieht eine Kombination der Wäscher-Technologie und des Nasselektrofilter-Prinzips vor. Die Wäscher-Technologie im Wege der Vorreinigungsstufe übernimmt die Vorreinigung, Kühlung und Konditionierung des Rauchgases. Im Anschluss daran wird durch den Nasselektrofilter im Wege der Hauptreinigungsstufe der Reingasstaubgehalt eingestellt. Eine Verbindung dieser beiden Gasreinigungstechnologien - Wäscher und Nasselektrofilter - ermöglicht eine Verbesserung gegenüber dem Stand der Technik dahingehend, dass der Reingasstaubgehalt des Rauchgases zur Einhaltung von strengen Abgasvorschriften weiter vermindert werden kann, zum Beispiel auf Werte von kleiner als 10 mg/Nm³.

Ein weiterer Vorteil der erfindungsgemäßen Vorrichtung besteht in einem geringen Platzbedarf in vertikaler Höhe. Dies ist darin begründet, dass die Vorreinigungsstufe in Form eines Verdampfungskühlers mit einer geringen Bauhöhe ausgeführt sein kann, weil darin - wie oben erläutert - keine vollständige Verdampfung des eingedüsten Wassers notwendig ist. In Wechselwirkung mit dieser geringeren Bauhöhe des Verdampfungskühlers ist es möglich, einen vertikal oberhalb des Verdampfungskühlers angeordneten Kühlkamin mit einer größeren Länge auszubilden und darin entsprechend mehr Dampf zu erzeugen.

Bei einem erfindungsgemäßen Verfahren ist vorgesehen, dass Rauchgas in eine Vorreinigungsstufe eingeleitet wird, die durch eine erste Verbindungsleitung mit der metallurgischen Anlage verbunden ist. Unter Verwendung von Wasser wird das Rauchgas in der Vorreinigungsstufe vorgereinigt und gekühlt. Anschließend wird das vorgereinigte und gekühlte Rauchgas durch eine zweite Verbindungsleitung in eine Hauptreinigungsstufe geleitet, in der eine Feinreinigung des Rauchgases durchgeführt wird. Das Rauchgas wird in der zweiten Verbindungsleitung durch geeignete Mittel beschleunigt und dadurch in Richtung der Hauptreinigungsstufe gefördert. In Folge der Beschleunigung des Rauchgases in der zweiten Verbindungsleitung ist es möglich, die Reinigung des Rauchgases in der Vorreinigungsstufe mit einem Feuchtigkeitsüberschuss durchzuführen, so dass die Vorreinigungsstufe anlagentechnisch einfacher und robuster als im Vergleich zum Stand der Technik ausgebildet sein kann. In der Vorreinigungsstufe abgeschiedenes Wasser, das sich während des Kühlens des Rauchgases bildet, kann mittels eines Wasserauffangbehälters gesammelt werden, der stromabwärts der Vorreinigungsstufe vorgesehen ist. Die Hauptreinigungsstufe ist in Form eines Nasselektrofilters ausgebildet ist, so dass eine Hauptreinigung des Rauchgases durch elektrostatische Abscheidung an zumindest einer Niederschlagselektrode erfolgt. Im Filterbetrieb des Nasselektrofilters wird Wasser durch Nebeldüsen in den Nasselektrofilter eingedüst, so dass alle Komponenten des Nasselektrofilters ständig mit dem eingedüsten Wasser benetzt sind.

Die Reinigung des Nasselektrofilters in Bezug auf darin abgeschiedene Staubpartikel erfolgt üblicherweise mit Wasser. Der Gesamtwasserverbrauch für das erfindungsgemäße Verfahren kann dadurch optimiert werden, dass die Vorreinigungsstufe und die Hauptreinigungsstufe im Gegenstromprinzip betrieben werden, wonach Wasser, das stromabwärts des Nasselektrofilters aufgefangen wird und nur schwach mit Staub verunreinigt ist, anschließend wieder der Vorreinigungsstufe zugeführt und darin durch eine Einspritzdüse oder dergleichen in das Rauchgas eingespritzt wird.

Die Erfindung eignet sich zur Gasreinigung bei pyrometallurgischen Prozessen, und im Speziellen zum Reinigen der Abgase von metallurgischen Gefäßen, z. B. Konverter, Elektroöfen oder dergleichen. Dies gilt sowohl für die Herstellung von Normal- und Edelstählen als auch für den Einsatz in Nichteisen-metallurgischen Prozessen. Ein weiterer Vorteil der Erfindung besteht darin, dass neben der Ausrüstung von Neuanlagen mit der erfindungsgemäßen Vorrichtung auch bestehende Anlagen, die bislang nur mit einem Wäscher oder nur mit einem Sprühkühler ausgerüstet sind, entsprechend um- bzw. nachgerüstet werden können.

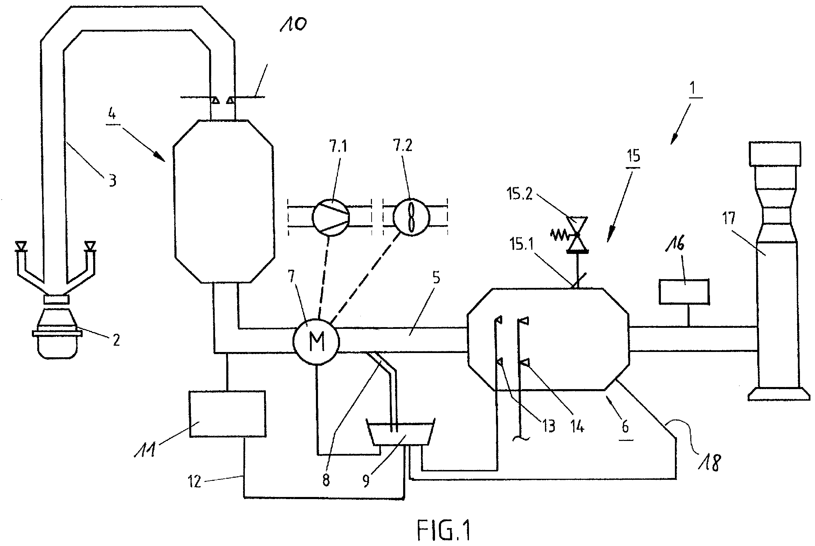

In der Zeichnung ist ein Ausführungsbeispiel der Erfindung dargestellt. In Figur 1 ist der konstruktive Aufbau einer Reinigungsvorrichtung 1 in einer Seitenansicht schematisch stark vereinfacht dargestellt, wobei hiermit ein erfindungsgemäßes Verfahren durchgeführt werden kann.

Die Vorrichtung 1 ist mit einer metallurgischen Anlage 2 über eine erste Verbindungsleitung 3 verbunden. Die Vorrichtung 1 umfasst eine Vorreinigungsstufe 4 in Form eines Verdampfungskühlers, der durch eine zweite Verbindungsleitung 5 mit einer Hauptreinigungsstufe 6 in Form eines

Nasselektrofilters verbunden ist. In der zweiten Verbindungsleitung 5 sind Mittel 7 (in Figur 1 auch mit "M" symbolisiert) vorgesehen, mit denen die Strömungsgeschwindigkeit des Rauchgases innerhalb der zweiten Verbindungsleitung erhöht und dadurch das Rauchgas in Richtung des Nasselektrofilters 6 gefördert werden kann.

In Figur 1 sind für die Mittel 7 zwei Alternativen 7.1 und 7.2, durch gestrichelte Linien referenziert, angedeutet. Die Mittel 7 können einerseits als Wasserstrahlpumpe 7.1 ausgebildet sein, die das Rauchgas in Richtung des Nasselektrofilters 6 fördert und mit der ein Druck an der metallurgischen Anlage 2 gesteuert werden kann. Alternativ können die Mittel 7 auch als Dampfstrahlventilator 7.2 oder sonstiges gasförmiges Treibmedium ausgebildet sein, mit der gleichen Funktion wie eine Wasserstrahlpumpe. Nachfolgend werden die Mittel 7 stets als Wasserstrahlpumpe 7.1 bezeichnet, ohne dass darin eine Einschränkung zu sehen ist.

Stromabwärts der Wasserstrahlpumpe 7.1 weist die zweite Verbindungsleitung 5 eine Abzweigung 8 auf, die in ein Wasserreservoir 9 mündet. Im Bereich dieser Abzweigung 8 wird das von der Wasserstrahlpumpe 7.1 geförderte Wasser zu wesentlichen Teilen in Folge von Schwerkraft bzw. Massenträgheit abgeschieden und durch die Abzweigung 8 in das Wasserreservoir 9 zurückgeführt.

Stromaufwärts des Verdampfungskühlers 4 sind Einspritzdüsen 10 vorgesehen, durch die Wasser in das heiße Rauchgas eingespritzt wird.Innerhalb des Verdampfungskühlers 4 kommt es in bekannter Weise zu einem Verdampfen des eingespritzten Wassers, wodurch gleichzeitig die Temperatur des Rauchgases vermindert und Staubpartikel, die in dem Rauchgas mitgeführt werden, mit Wasser benetzt werden. Unterhalb bzw. stromabwärts des Verdampfungskühlers 4 ist ein sog. Eindicker 11 vorgesehen, in dem Schlamm aus dem Verdampfungskühler 4 aufgenommen wird. Aus dem Eindicker 11 kann Wasser durch eine entsprechende Verbindungsleitung 12 in das Wasserreservoir 9 abgeleitet werden.

Innerhalb des Nasselektrofilters 6 sind Spüldüsen 13 und Nebeldüsen 14 vorgesehen. Die Spüldüsen 13 werden dazu benutzt, Wasser während der Blaspausen der metallurgischen Anlage 2 in den Nasselektrofilter 6 hineinzuspritzen, um den darin abgelagertem Staub abzuwaschen.Demgegenüber kann im Filterbetrieb des Nasselektrofilters 6 Wasser durch die Nebeldüsen 14 eingedüst werden, um eine ständige Benetzung aller Komponenten des Nasselektrofilters 6 sicherzustellen. Zur Versorgung der Nebeldüsen 14 wird vorzugsweise Frischwasser verwendet, um eine Verstopfung der Düsen und deren Verschleiß zu vermeiden. Das Frischwasser wird ebenfalls dazu benötigt, um Verdampfungsverluste, Abschlemmwasser und sonstige mögliche Wasserverluste zu kompensieren.

In einer Gehäusewandung des Nasselektrofilters 6 können Druckentlastungsmittel 15 vorgesehen sein. Falls sich innerhalb des Nasselektrofilters explosionsfähige Gasgemische aus CO und O₂ bilden sollten, kann der Druckanstieg bei einer möglichen Verpuffung durch ein Öffnen dieser Druckentlastungsmittel 15 hin zur Umgebungs-Atmosphäre ausgeglichen werden, um eine Schädigung zu verhindern. Die Druckentlastungsmittel 15 können entweder in Form einer verschwenkbaren Druckentlastungsklappe 15.1 oder in Form eines Überdruckventils 15.2 ausgebildet sein. Die Darstellung in der Fig. 1 ist dahingehend zu verstehen, dass die Druckentlastungsmittel 15 für den Nasselektrofilter entweder als Druckentlastungsklappe 15.1 oder als Überdruckventil 15.2 vorgesehen sind. Es ist auch möglich, dass die Gehäusewandung des Nasselektrofilters 6 mehrere Druckentlastungsmittel 15 umfasst, in Form einer Druckentlastungsklappe 15.1 und/oder eines Überdruckventils 15.2.

In der Fig. 1 ist nicht dargestellt, dass Druckentlastungsmittel 15, wie soeben erläutert in Form einer Druckentlastungsklappe 15.1 und/oder eines Überdruckventils 15.2, auch für den Verdampfungskühler 4 vorgesehen sein können.

Stromabwärts des Nasselektrofilters 6 ist ein Kondensator 16 vorgesehen, mit dem verdampftes Wasser zurückgewonnen werden kann. Ein solcher Kondensator 16 ist in der Figur 1 stark vereinfacht dargestellt, und kann entweder mit der von dem Nasselektrofilter 6 abzweigenden Rohrleitung in Fluidverbindung stehen oder aber direkt in dieser Rohrleitung angeordnet sein.

Die von dem Nasselektrofilter 6 stromabwärts verlaufende Leitung führt anschließend zu einem Kamin 17, an dessen oberen Ende eine Abfackeleinrichtung angeordnet ist. Der Transport des gereinigten Gases in Richtung des Kamins 17 kann optional von einem zusätzlichen Gebläse (nicht dargestellt) bewerkstelligt werden, das in das Leitungssystem integriert ist. Abweichend von der Darstellung in Fig. 1 kann das gereinigte Gas auch zum Beispiel in einen Gasbehälter geleitet werden.

Die Erfindung funktioniert nun wie folgt:
Heißes Rauchgas, das in der metallurgischen Anlage 2 entsteht, wird durch die erste Verbindungsleitung 3 in den Verdampfungskühler 4 hineingeleitet. Stromaufwärts des Verdampfungskühlers 4 wird durch die Einspritzdüsen 10 Wasser in das heiße Rauchgas eingespritzt, wobei dieses Wasser dann innerhalb des Verdampfungskühlers 4 teilweise verdampft. Hierbei wird das Rauchgas geeignet gekühlt, wobei gleichzeitig die Staubpartikel des Rauchgases mit Wasser benetzt werden. Der Wassereintrag in den Verdampfungskühler 4 und dessen Bauhöhe in vertikaler Richtung sind für die vorliegende Erfindung so gewählt, dass sich in dem Verdampfungskühler 4 ein Feuchtigkeitsüberschuss einstellt. Überschüssiges Wasser bzw. Schlamm werden in dem Eindicker 11 aufgefangen.

Die Wasserstrahlpumpe 7.1 dient als Ventilator und bewirkt durch die feinere Dispergierung der Wassertropfen auch eine weitere Reinigung des Rauchgases. Ein Großteil des als Treibmedium eingesetzten Wassers wird vor Eintritt in den Nasselektrofilter 6 mittels Schwerkraft oder Massenträgheit abgeschieden und durch die Abzweigung 8 wieder dem Wasserreservoir 9 zugeführt. In Folge dessen wird allein das Rauchgas in den Nasselektrofilter 6 hinein gefördert.

Während einer Blaspause der metallurgischen Anlage 2 wird Wasser durch die Spüldüsen 13 eingespritzt. Das Spülwasser, das in diesem Betriebsmodus innerhalb des Nasselektrofilters 6 anfällt, wird auch wieder Dem Wasserreservoir 9 zugeführt. Dies kann direkt über eine Leitung 18 erfolgen, die einen stromabwärtigen Bereich des Nasselektrofilters 6 mit dem Wasserreservoir 9 verbindet. Optional kann das aus dem Nasselektrofilter 6 entnommene Spülwasser vor einer Rückführung in das Wasserreservoir 9 mittels eines Eindickers vom Staub gereinigt werden.

In diesem Zusammenhang darf darauf verwiesen werden, dass die Wasserstrahlpumpe 7.1 aus dem Wasserreservoir 9 gespeist werden kann, weil die Wasserstrahlpumpe keine besonderen Anforderungen an die Reinheit des Wassers stellt. Die Spüldüsen 13 und die Einspritzdüsen 10 für den Verdampfungskühler 4 können ebenfalls aus dem Wasserreservoir 9 gespeist werden. Schließlich kann die in dem Verdampfungskühler 4 verdampfte Wassermenge dem Kreislauf der Wasserwirtschaft zum Ausgleich des Wasserverlustes wieder als sauberes Speisewasser zugeführt werden, zum Beispiel über die Nebeldüsen 14.

Die Vorrichtung 1 und das entsprechende Verfahren zur Reinigung von Rauchgas gemäß der vorliegenden Erfindung kombinieren die Vorteile der Nass- und der Trockenentstaubung. Die einzelnen Komponenten der Vorrichtung 1 gehören jeweils zum Stand der Technik und gewährleisten somit eine preiswerte Beschaffung und einen robusten Betrieb. Hiermit einher gehen ein geringes notwendiges Investitionsvolumen und ein geringer Wartungsaufwand. Im Ergebnis wird durch die vorliegende Erfindung eine neuartige Anlagenkonfiguration und ein entsprechendes Verfahren für eine Entstaubungsanlage für schmelzmetallurgische Prozesse (z. B. BOF, SAF, ggf. auch EAF) geschaffen, unter Berücksichtigung der Optimierung von Invest- und Betriebskosten.

## Patentansprüche

1. Verfahren zum Reinigen von Rauchgas einer metallurgischen Anlage (2), mit den Schritten:
Einleiten von Rauchgas in eine durch eine erste Verbindungsleitung (3) mit der metallurgischen Anlage (2) verbundene Vorreinigungsstufe (4), in der das Rauchgas unter Verwendung von Wasser vorgereinigt und gekühlt wird, und
Zuleiten des in der Vorreinigungsstufe (4) vorgereinigten und gekühlten Rauchgases durch eine zweite Verbindungsleitung (5) in eine Hauptreinigungsstufe (6), in der eine Feinreinigung des Rauchgases und damit eine Hauptreinigung des Rauchgases durch elektrostatische Abscheidung an zumindest einer Niederschlagselektrode erfolgt, wobei das Rauchgas in der zweiten Verbindungsleitung (5) zur Erhöhung der Strömungsgeschwindigkeit beschleunigt und dadurch in Richtung der Hauptreinigungsstufe (6) gefördert wird,
**dadurch gekennzeichnet,**
**dass** die Hauptreinigungsstufe in Form eines Nasselektrofilters (6) ausgebildet ist, wobei im Filterbetrieb des Nasselektrofilters (6) Wasser durch Nebeldüsen (14) in den Nasselektrofilter (6) eingedüst wird, so dass alle Komponenten des Nasselektrofilters (6) ständig mit dem eingedüsten Wasser benetzt sind.

2. Verfahren nach Anspruch 1, **dadurch gekennzeichnet, dass** die Vorreinigungsstufe in Form eines Verdampfungskühlers (4) ausgebildet ist und mit Feuchtigkeitsüberschuss betrieben wird, wobei stromabwärts bzw. unterhalb des Verdampfungskühlers (4) ein Wasserauffangbehälter (12) vorgesehen ist, in dem Wasser, das sich beim Kühlen von Rauchgas innerhalb des Verdampfungskühlers (4) bildet, gesammelt wird.

3. Verfahren nach Anspruch 1 oder 2, **dadurch gekennzeichnet, dass** die Hauptreinigungsstufe in Form eines Nasselektrofilters (6) ausgebildet ist, in dem eine Hauptreinigung des Rauchgases durch elektrostatische
Abscheidung an zumindest einer Niederschlagselektrode erfolgt, vorzugsweise, dass der Reingasstaubgehalt des Rauchgases durch den Nasselektrofilter (6) auf einen Wert von kleiner oder gleich 10 mg/Nm³ vermindert wird.

## Claims

1. Method of cleaning flue gas of a metallurgical plant (2), comprising the steps:
introducing flue gas into a pre-cleaning stage (4) which is connected with the metallurgical plant (2) by a first connecting line (3) and in which the flue gas is pre-cleaned and cooled with use of water, and
conducting the flue gas pre-cleaned and cooled in the pre-cleaning stage (4) through a second connecting line (5) into a main cleaning stage (6) in which a fine cleaning of the flue gas and thus a main cleaning of the flue gas is carried out by electrostatic depostiion at at least one precipitation electrode,
wherein the flue gas is accelerated in the second connecting line (5) in order to increase the flow speed and is thereby conveyed in the direction of the main cleaning stage (6),
**characterised in that**
the main cleaning stage is constructed in the form of a wet electrofilter (6), wherein in filtering operation of the wet electrofilter (6) water is injected into the wet electrofilter (6) by atomising nozzles (14) so that all components of the wet electrofilter (6) are constantly wetted by the injected water.

2. Method according to claim 1, **characterised in that** the pre-cleaning stage is constructed in the form of an evaporation cooler (4) and is operated with excess moisture, wherein provided downstream or below the evaporation cooler (4) is a water collecting container (12) in which water forming within the evaporation cooler (4) during the cooling of flue gas is collected.

3. Method according to claim 1 or 2, **characterised in that** the main cleaning stage is constructed in the form of a wet electrofilter (6) in which a main cleaning of the flue gas is carried out by electrostatic deposition at at least one precipitation electrode, preferably **in that** the clean gas dust content of the flue gas is reduced by the wet electrofilter (6) to a value less than or equal to 10 mg/Nm³.

## Revendications

1. Procédé pour la purification des gaz de fumée d'une installation métallurgique (2), comprenant les étapes consistant à :
introduire des gaz de fumée dans un étage de purification préalable (4) relié à l'installation métallurgique (2) via un premier conduit de liaison (3), étage dans lequel les gaz de fumée sont refroidis et sont soumis à une purification préalable en utilisant de l'eau ; et
acheminer à travers un deuxième conduit de liaison (5) dans un étage de purification principale (6) les gaz de fumée refroidis et soumis à une purification préalable dans l'étage de purification préalable (4), étage dans lequel a lieu une purification fine des gaz de fumée et par conséquent une purification principale des gaz de fumée via une séparation électrostatique contre au moins une électrode de précipitation ;
dans lequel les gaz de fumée sont soumis à une accélération dans le deuxième conduit de liaison (5) afin d'augmenter la vitesse d'écoulement et sont ainsi transportés dans la direction de l'étage de purification principale (6) ;
**caractérisé en ce que** l'étage de purification principale est réalisé sous la forme d'un électrofiltre par voie humide (6), de l'eau étant injectée dans l'électrofiltre par voie humide (6) au cours de la mise en exploitation de l'électrofiltre par voie humide (6) à travers des buses de brumisation (14), d'une manière telle que tous les composants de l'électrofiltre par voie humide (6) sont mouillés de manière constante avec l'eau introduite sous la forme de brume.

2. Procédé selon la revendication 1, **caractérisé en ce que** l'étage de purification préalable est réalisé sous la forme d'un dispositif de refroidissement par évaporation (4) et est entraîné avec un excès d'humidité ; dans lequel on prévoit, en aval, respectivement en dessous du dispositif de refroidissement par évaporation (4), un récipient de réception (12) pour l'eau, dans lequel se rassemble de l'eau qui s'est formée lors du refroidissement des gaz de fumée à l'intérieur du dispositif de refroidissement par évaporation (4).

3. Procédé selon la revendication 1 ou 2, **caractérisé en ce que** l'étage de purification principale est réalisé sous la forme d'un électrofiltre par voie humide (6) dans lequel a lieu une purification principale des gaz de fumée via une séparation électrostatique contre au moins une électrode de précipitation, de préférence **en ce qu'**on diminue la teneur en poussières du gaz purifié obtenu à partir des gaz de fumée à travers l'électrofiltre par voie humide (6) à une valeur qui est inférieure ou égale à 10 mg/Nm³.
